# EUROPÄISCHE PATENTSCHRIFT

(11) **EP 1 957 234 B1**
(45) Veröffentlichungstag und Bekanntmachung des Hinweises auf die Patenterteilung: **01.11.2017**
(21) Anmeldenummer: 06818111.4
(22) Anmeldetag: 28.11.2006
(51) Int. Cl.: B23P 19/06, F16B 37/06

(54) **VERFAHREN ZUM ANBRINGEN EINES FUNKTIONSELEMENTES AN EINEM FLACHMATERIAL SOWIE VERBINDUNG ZWISCHEN EINEM FUNKTIONSELEMENT UND EINEM FLACHMATERIAL**
METHOD OF ATTACHING A FUNCTIONAL ELEMENT TO A FLAT MATERIAL AND CONNECTION BETWEEN A FUNCTIONAL ELEMENT AND A FLAT MATERIAL
PROCÉDÉ POUR APPLIQUER UN ÉLÉMENT FONCTIONNEL SUR UN MATÉRIAU PLAT ET LIAISON ENTRE UN ÉLÉMENT FONCTIONNEL ET UN MATÉRIAU PLAT

(30) Priorität: 09.12.2005 DE 102005059372; 03.04.2006 DE 102006015816; 31.05.2006 DE 102006025730; 06.07.2006 DE 102006031615
(43) Veröffentlichungstag der Anmeldung: 20.08.2008
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB
(86) Internationale Anmeldenummer: PCT/DE2006/002092
(87) Internationale Veröffentlichungsnummer: WO 2007/065398

(56) Entgegenhaltungen:
- EP-A- 1 500 461
- EP-A- 1 674 741
- EP-A1- 0 539 793
- DE-A1- 4 239 584
- FR-A1- 2 792 270
- JP-A- 3 028 514
- US-A1- 1 332 687
- US-A1- 1 502 399
- US-A1- 3 602 974
- US-A1- 2004 042 870
- US-B1- 6 318 940

## Beschreibung

Die Erfindung bezieht sich auf ein Verfahren gemäß Oberbegriff Patentanspruch 1 sowie auf eine Verbindung gemäß Oberbegriff Patentanspruch 9.

Verfahren zum Anbringen oder Fixieren von Funktionselementen, insbesondere von Verbindungselementen wie Muttern, Bolzen oder dergleichen an einem Flachmaterial, beispielsweise an einem aus einem Flachmaterial hergestellten Werkstück sind in verschiedensten Ausführungen bekannt.

Verfahren zum Anbringen bzw. Fixieren von Funktionselementen und dabei insbesondere auch von Verbindungselementen, wie Muttern, Bolzen oder dgl. Verbindungselementen an einem Flachmaterial oder einem aus diesem Material hergestellten Werkstück sind in verschiedenen Ausführungen bekannt. So ist insbesondere auch ein Verfahren bekannt, bei dem das Verbinden bzw. Fixieren des jeweiligen Funktionselementes durch Vernieten im Bereich eines aus dem Flachmaterial durch bleibendes oder plastisches Verformen, d.h. durch Ziehen oder Pressen hergestellten domartigen Abschnitts erfolgt (EP 539 793 B1). Bei diesem bekannten Verfahren wird nach dem Fügen und während des Vernieten des am Funktionselement vorgesehenen Nietbundes der domartige Abschnitt derart zurückverformt, dass der Durchmesser der Fügeöffnung im Flachmaterial reduziert und dadurch deren Rand zur Erzeugung einer radialen Druckringspannung gegen den Nietbund gepresst wird, und zwar zur Erzielung einer zusätzlichen Verankerung. Dieses Verfahren erfordert ein relativ aufwendiges Werkzeug. Weiterhin hat sich gezeigt, dass mit diesem Verfahren entgegen den Erwartungen eine wesentliche Verbesserung der Verankerung bzw. der Ausreißfestigkeit des Funktionselementes im Werkstück bzw. im Flachmaterial nicht erreicht wird.

Aus der JP 328514 A ist ferner eine Verfahren zum Setzen einer Nietmutter in einem Flachmaterial sowie eine entsprechende Nietmutter bekannt. Bei der Nietmutter gemäß JP 328514 A ist an einem vorgesehenen zylindrischen Nietbund, und zwar an einem inneren Umfang des Nietbundes im Bereich der Öffnung, eine abgeschrägte Oberfläche vorgesehen. Zusätzlich weist die Nietmutter an einer Anlageoberfläche im Bereich eines äußeren Umfanges des Nietbundes eine Ringnut auf. Das Verformen des Nietbundes beim Vernieten führt aufgrund der abgeschrägten Oberfläche am Nietbund und der entsprechend ausgebildeten Ringnut nicht zu einer lokalen Verformung und Spannungsbeaufschlagung des Flachmaterials. Die JP 328514 A offenbart die Merkmale des Oberbegriffs des Anspruchs 1.

Aufgabe der Erfindung ist es, ein Verfahren aufzuzeigen, welches mit vereinfachten Mitteln durchführbar ist und dennoch ein Verankern von Funktionselementen in einem Flachmaterial mit hoher Ausreißfestigkeit ermöglich. Zur Lösung dieser Aufgabe ist ein Verfahren entsprechend dem Patentanspruch 1 ausgebildet. Eine Verbindung ist Gegenstand des Patentanspruches 9. Vorteilhafte Ausgestaltungen des Verfahrens sind in den Unteransprüchen 1-8 angegeben.

Bei der Erfindung erfolgt das Anbringen des jeweiligen Funktionselementes am Flachmaterial oder an einem Werkstück aus dem Flachmaterial zwar ebenfalls im Bereich eines domartigen Abschnitts bzw. an einer an der Basis dieses Abschnitts gebildeten Fügeöffnung durch Vernieten des jeweiligen Nietbundes, d. h. durch Fügen und plastisches Verformen dieses Nietbundes, ein Verformen des domartigen Abschnitts in der Weise, dass der Durchmesser der Fügeöffnung reduziert wird, erfolgt aber nicht. Die Verankerung des Funktionselementes erfolgt allein durch das Vernieten, d.h. allein dadurch, dass der verformte Nietbund das Flachmaterial im Bereich der Fügeöffnung hintergreift.

Bei einer bevorzugten Ausführungsform der Erfindung erfolgt das Formen des domartigen Abschnitts sowie das Vernieten in einem einzigen Werkzeug, wobei in diesem Werkzeug zeitlich nacheinander zunächst der domartige Abschnitt geformt und dann nach dem Formen dieses Abschnitts das Fügen und Vernieten des Funktionselementes erfolgen.

Unter "Flachmaterial" sind im Sinne der Erfindung ein Flachmaterial aus einem bleibend verformbaren Werkstoff, insbesondere aus einem metallischen Werkstoff, beispielsweise Stahl sowie auch ein aus einem derartigen Flachmaterial gefertigtes Werkstück zu verstehen.

Unter "Funktionselement" sind im Sinne der Erfindung ganz allgemein ein in einem derartigen Flachmaterial befestigtes Element zu verstehen, insbesondere auch ein Verbindungselement, wie z. B. eine Mutter, ein Bolzen oder dergleichen.

Die Erfindung wird im Folgenden anhand der Figuren an Ausführungsbeispielen näher erläutert. Es zeigen:
- Fig. 1: in vereinfachter Darstellung und im Schnitt ein nicht zu der Erfindung gehörendes Funktions- oder Fügeelement in Form einer Nietmutter;
- Fig. 2: in vereinfachter Darstellung, teilweise im Schnitt eine nicht von der Erfindung umfasste Verbindung zwischen dem Funktionselement der Fig. 1 und einem Flachmaterial;
- Fig. 3: in vereinfachter Darstellung eine Werkzeuganordnung zum Befestigen des nicht zu der Erfindung gehörenden Funktionselementes der Figur 1 in dem Flachmaterial;
- Fig. 4: in vergrößerter Darstellung ein Detail einer Werkzeugmatrize;
- Fig. 5: in einer Darstellung wie Figur 1 eine weitere mögliche Ausführungsform einer nicht von der Erfindung umfassten Verbindung zwischen einem Funktionselement und einem Flachmaterial;
- Fig. 6 und 7: ein nicht zu der Erfindung gehörendes Funktionselement, zusammen mit einem Flachmaterial vor und nach der Herstellung der Verbindung zwischen dem Flachmaterial und dem Funktionselement;
- Fig. 8 und 9: in Darstellungen ähnlich Figur 1 weitere Ausführungsformen einer nicht von der Erfindung umfassten Verbindung;
- Fig. 10: in vereinfachter Darstellung die Verbindung zwischen einem aus einem metallischen Flachmaterial, beispielsweise aus Stahlblech hergestellten Werkstück und einem als Nietmutter ausgebildeten Verbindungselement, teilweise geschnitten, bei einer Ausführungsform gemäß der Erfindung;
- Fig. 11: das Werkstück der Figur 10 im Bereich einer Vorlochung oder Fügeöffnung für das Verbindungselement;
- Fig. 12: in Einzeldarstellung das Werkstück der Figur 10 im Bereich einer Vorlochung oder Fügeöffnung in seiner Formgebung nach dem Fügen;
- Fig. 13: das Verbindungselement der Figur 10 in Einzeldarstellung und im Schnitt;
- Fig. 14: das Verbindungselement der Figur 13 in einer Draufsicht auf seine den Nietbund aufweisende Stirnseite;
- Fig. 15 und 16: Darstellungen ähnlich Figur 14 bei weiteren Ausführungsformen gemäß der Erfindung;
- Fig. 17: in einer Darstellung ähnlich Figur 13 eine weitere mögliche Ausführung eines Verbindungselementes in Form einer Nietmutter;
- Fig. 18: in vergrößerter Teildarstellung die Verbindung zwischen einem Verbindungselement und einem aus Stahlblech hergestellten Werkstück gemäß einer weiteren Ausführungsform der Erfindung.

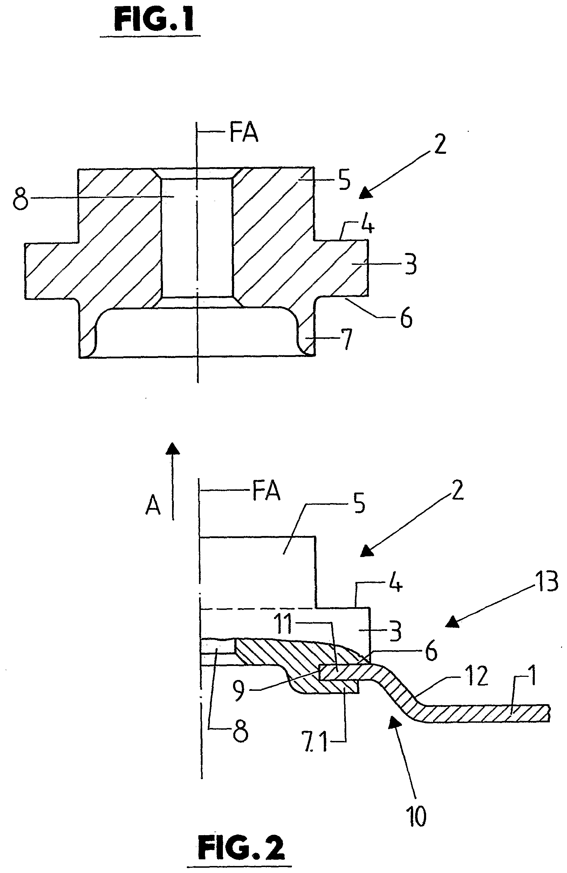

Die Figuren 1 bis 9 stellen nicht zur Erfindung gehörende Beispiele dar.

Die folgende, zu den Figuren 1 bis 9 zugehörige Beschreibung bezieht sich somit auf nicht von der Erfindung umfasste Gegenstände. In den Figuren 1 - 3 sind 1 ein Flachmaterial aus einem bleibend verformbaren Werkstoff, beispielsweise ein Metall- oder Stahlblech und 2 ein Funktionselement in Form einer Nietmutter, die entsprechend der Fig. 2 durch Fügen und Vernieten im Flachmaterial 1 gehalten ist. Das Funktionselement 2 ist aus einem für derartige Elemente geeigneten metallischen Werkstoff, beispielsweise aus Stahl gefertigt, und zwar mit einem Flanschabschnitt 3, der bei der dargestellten Ausführungsform eine kreiszylinderförmige Umfangsfläche aufweist, mit einem über die in der Figur 1 obere Stirnseite 4 des Flanschabschnittes 3 wegstehenden Befestigungsabschnitt 5 sowie mit einem über die in der Figur 1 untere Stirnseite 6 wegstehenden in dem noch nicht vernieteten Zustand hohlen oder kreiszylinderförmigen Nietbund 7, dessen Außendurchmesser ebenso wie der Außendurchmesser des Befestigungsabschnittes 5 kleiner ist als der Außendurchmesser des Flanschabschnittes 3. Die zylinderförmigen Außenflächen der Abschnitte 3 und 5 sowie des Nietbundes 7 in dem noch nicht vernieteten Zustand sind jeweils konzentrisch zur gemeinsamen Achse FA des Funktionselementes 2 vorgesehen. Mit 8 ist eine vorzugsweise mit einem Innengewinde versehene zumindest an einem Ende offene Bohrung bezeichnet, die achsgleich mit der Achse FA im Flanschabschnitt 3 sowie auch im Befestigungsabschnitt 5 ausgebildet ist und deren Durchmesser kleiner ist als der Innendurchmesser des Nietbundes 7 im noch nicht vernieteten Zustand.

Dort, wo das Funktionselement 2 im Flachmaterial 1 befestigt ist, ist in dieses Flachmaterial eine Fügeöffnung 9 eingebracht. Weiterhin ist das Flachmaterial 1 im Bereich dieser Fügeöffnung 9 bleibend verformt, und zwar derart, dass der mit 10 bezeichnete domförmige Abschnitt eine kreisförmige, ebene oder im Wesentlichen ebene Basis 11 bildet, in der mittig die Fügeöffnung 9 vorgesehen und die von der Ebene des Flachmaterials 1 beabstandet ist. Bei der dargestellten Ausführungsform liegt die Ebene der Basis 11 parallel oder annähernd parallel zur Ebene des Flachmaterials 1. Die Fügeöffnung 9 besitzt einen Durchmesser, der etwa gleich dem Außendurchmesser des Nietbundes 7 im nicht vernieteten Zustand ist, aber kleiner als der Durchmesser der Basis 11, der bei der dargestellten Ausführungsform gleich oder etwa gleich dem Außendurchmesser des Flanschabschnittes 3 ist. Mit 12 ist der kegelstumpfförmigen Rand des Abschnitts 10 bezeichnet. Wird die Fügeöffnung 9 vor dem Formen des domartigen Abschnitts erzeugt, so erfolgt dies so, dass der Durchmesser der Fügeöffnung 9 bereits im noch nicht verformten Flachmaterial 1 gleich oder größer ist als der Außendurchmesser des Nietbundes 7.

Das Verbinden des Funktionselementes 2 mit dem Flachmaterial 1 erfolgt nach dem Formen des domförmigen Abschnitts 10 durch Vernieten, d.h. durch zunehmendes Einführen (Fügen) des Nietbundes 7 in die Fügeöffnung 9 und durch gleichzeitiges Verformen des Nietbundes 7 in der Weise, dass der die Fügeöffnung 9 umgebende Bereich der Basis 11 zwischen dem verformten Nietbund 7.1, der sich an der konkaven Seite des domförmigen Abschnitts 10 befindet, und der die Anlagefläche für das Flachmaterial 1 bildenden Stirnseite 6 eingespannt ist, die sich an der konvexen Seite des domförmigen Abschnitts 10 befindet. Diese in der Figur 2 allgemein mit 13 bezeichnete Verbindung zwischen dem Flachmaterial 1 und dem Funktionselement 2 erfolgt ohne Rückformen des domförmigen Abschnitts 10 und ohne eine Reduzierung des Durchmessers der Fügeöffnung 9. Da letztere in der ebenen Basis 11 vorgesehen ist und auch der verformte Nietbund 7.1 diese ebene Basis 11 im Bereich der Fügeöffnung 9, d.h. an der Unterseite des Flachmaterials 1 und damit innerhalb des domförmigen Abschnitts 10 hintergreift, ist für das Funktionselement 2 eine hohe Ausreißfestigkeit gegen in Richtung der Achse FA wirkende Kräfte (Pfeil A) erreicht, zumal der umgelegte bzw. verformte Nietbund 7.1 mit seinem bezogen auf die Achse FA radial außenliegenden Bereich bis in die unmittelbare Nähe des Übergangs zwischen der ebenen Basis 11 und dem Rand 12 reicht.

Durch das Befestigen des Funktionselementes 2 im Bereich des domförmigen Abschnitts 10 ist weiterhin sichergestellt, dass sich beim Vernieten der verformte Nietbund 7.1 in optimaler Weise ausbilden kann und dieser verformte Nietbund 7.1 auch nicht über die dem Flanschabschnitt 3 abgewandte Seite des Flachmaterials 1 bzw. des von diesem Flachmaterial gebildeten Werkstücks vorsteht.

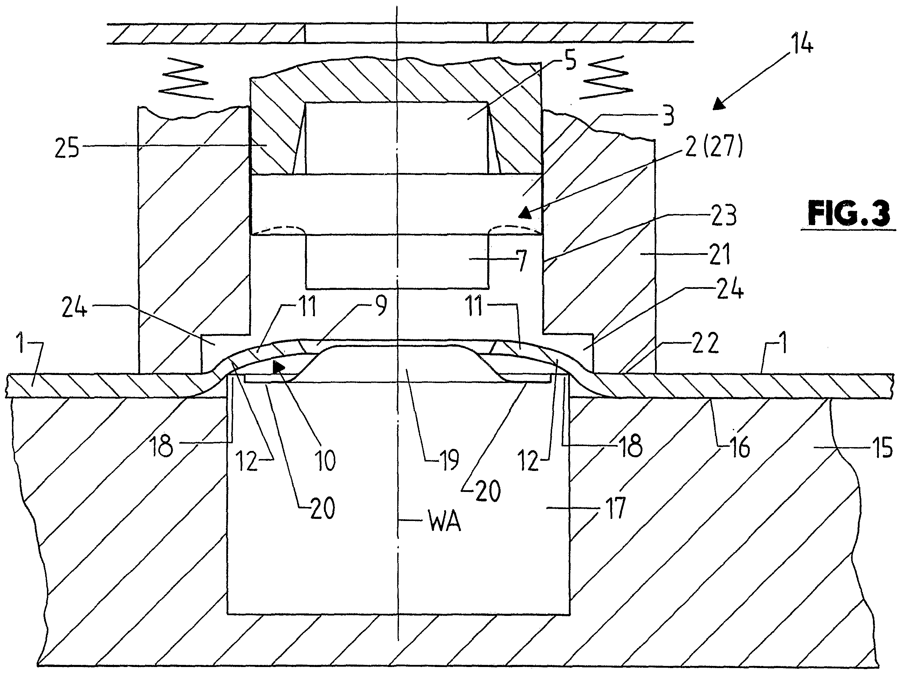

Die Figur 3 zeigt eine Werkzeuganordnung 14, mit der das Formen des domförmigen Abschnitts 10 im Bereich der im Flachmaterial 1 bereits vorbereiteten Fügeöffnung 9, das Fügen des Funktionselementes 2 bzw. des Nietbundes 7 und das Vernieten in einem einzigen Werkzeug erfolgen. Die Werkzeuganordnung 14 besteht hierzu aus einem Unterwerkzeug 15, welches mit seiner Oberseite eine plane An- oder Auflagefläche für die Unterseite des Flachmaterials 1 bildet. In eine zur Auflagefläche 16 hin offene Ausnehmung des Unterwerkzeugs 15 ist eine Matrize 17 eingesetzt, die mit ihrem oberen Ende über die Auflagefläche 16 vorsteht und dort einen kreisringförmigen, die Matrizen- und Werkzeugachse WA umschließenden Matrizenbund 18 sowie in der Mitte einen kegelstumpfförmigen, abgerundeten Nietkopf 19 bildet, der ebenfalls mit seiner Achse achsgleich mit der Achse WA angeordnet ist. Zwischen dem Nietkopf 19 und dem diesen Nietbund konzentrisch schließenden Matrizenbund 18 ist die Matrize 17 mit einer rinnenartigen, die Achse WA ringförmig umschließenden Vertiefung 20 ausgebildet, die bezogen auf die Achse WA radial außenliegend vom Matrizenbund 18 und radial innenliegend von der Kegelfläche des Nietkopfes 19 begrenzt ist. Bei der dargestellten Ausführungsform weist der Matrizenbund 18 einen etwa quadratischen oder rechteckförmigen Ringquerschnitt mit leicht abgerundeten Randbereichen auf.

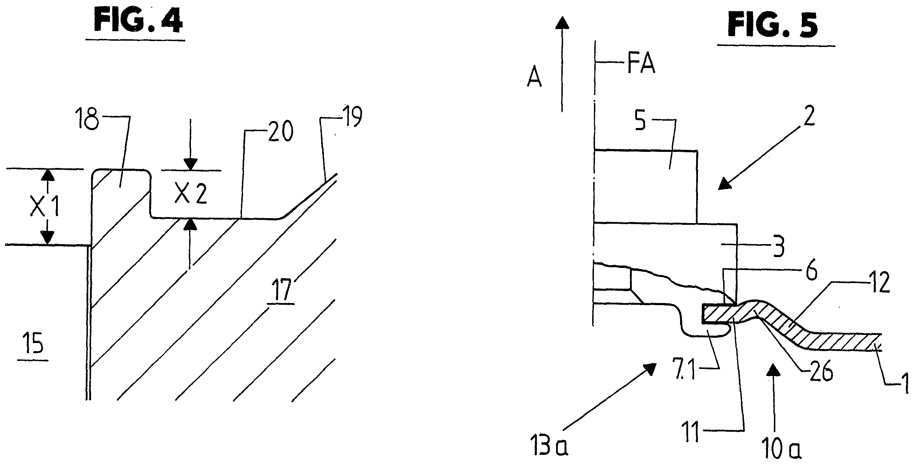

Der Abstand mit dem der Matrizenbund 18 über die Ebene der Anlagefläche 16 vorsteht ist mit x1 bezeichnet (Fig. 4). Der Abstand, mit dem der Matrizenbund 18 über die Ebene des Bodens der ringförmigen Vertiefung 20 vorsteht ist mit x2 bezeichnet. Bei der dargestellten Ausführungsform ist x1 größer als x2. Durch den Abstand x1 wird im Wesentlichen die Höhe des domförmigen Abschnitts 10 bestimmt. Der Abstand x2 bestimmt im Wesentlichen den Freiraum zwischen der Matrize 17 und der Unterseite des Flachmaterials 1 beim Vernieten. Das Maß x1 - x2 ist in etwa gleich dem Abstand, den der verformte Nietbund 7.1 von der Unterseite des an den domförmigen Abschnitt 10 angrenzenden Flachmaterials 1 aufweist.

Die Werkzeuganordnung 14 umfasst weiterhin einen ringförmigen beispielsweise gefederten Niederhalter 21, der achsgleich mit der Werkzeugachse WA angeordnet und in Richtung dieser Werkzeugachse u. a. auch zum Einspannen des Flachmaterials 1 mit seiner ringförmigen Niederhalterfläche 22 auf das Unterwerkzeug 15 absenkbar ist. An der planen, ringförmigen Niederhalterfläche 22 besitzt der Niederhalter 21 einen Innendurchmesser, der größer ist als der Außendurchmesser des Matrizenbundes 18, und zwar um einen Betrag, der größer ist als die doppelte Materialstärke bzw. -dicke D des Flachmaterials 1. Oberhalb der Niederhalterfläche 22 besitzt der Niederhalter 21 einen Innendurchmesser, der kleiner ist als der Außendurchmesser des Matrizenbundes 18. Bei der dargestellten Ausführungsform ist der Innendurchmesser des Niederhalters 21 oberhalb der Niederhalterfläche 22 in etwa gleich dem Innendurchmesser des Nietbundes 18. Zwischen der Innenfläche 23 und der Niederhalterfläche 22 ist der Niederhalter 21 mit einer einen Freiraum bildenden ringförmigen Ausnehmung 24 ausgeführt, die sowohl an der Niederhalterfläche 22, als auch an der Innenseite 23 des Niederhalters 21 offen ist. In Richtung der Achse WA besitzt die Ausnehmung 24 eine Abmessung, die größer ist als das Maß x1.

Im Niederhalter 21 ist und relativ zu diesem ist in Richtung der Achse WA ein Stempel 25 axial bewegbar vorgesehen. Dieser Stempel 25 ist ebenso wie der Niederhalter 21 Teil eines Oberwerkzeuges, beispielsweise Teil eines Stanzkopfes, und wird durch eine Betätigungseinrichtung, beispielsweise durch einen auf- und abbewegbaren Werkzeughalter einer die Werkzeuganordnung 14 enthaltenen Presse betätigt. Der Stempel 25 ist an seiner dem Werkzeugunterteil bzw. der Matrize 17 zugewandten Stirnseite so ausgebildet, dass dort jeweils das mit dem Flachmaterial 1 zu verbindende Funktionselement 2 gehalten und mit dem sich absenkenden Stempel 25 mitgeführt wird.

Die Arbeitsweise der Werkzeuganordnung 14 lässt sich, wie folgt, beschreiben:
Das Flachmaterial 1 wird bei angehobenem Niederhalter 21 und Stempel 25 in die Werkzeuganordnung 14 eingelegt, und zwar derart, dass die in dem dann noch flachen Flachmaterial 1 bereits vorgelochte Fügeöffnung 9 mit ihrer Achse möglichst genau achsgleich mit der Werkzeugachse WA angeordnet ist. Dies kann beispielsweise durch am Werkzeugunterteil vorgesehene Positionierelemente, beispielsweise Positionierstifte erreicht werden, die mit Positionierbereichen, beispielsweise mit Positionieröffnungen im Flachmaterial 1 zusammenwirken.

Nach dem Einlegen des Flachmaterials 1 in die Werkzeuganordnung 14 wird das Oberwerkzeug abgesenkt. Hierbei kommt zunächst der Niederhalter 21 mit seiner Niederhalterfläche 22 zur Anlage gegen die Oberseite des Flachmaterials 1, sodass dann über den Matrizenbund 18 der domförmige Abschnitt 10 geformt wird, gegebenenfalls auch noch unter Mitwirkung der dem Matrizenbund 18 gegenüberliegenden Fläche der Ausnehmung 24. Nach dem vollständigen Absenken des Niederhalters 21 und nach dem vollständigen Formen des domförmigen Abschnitts 10 in dem nunmehr zwischen dem Niederhalter 21 und dem die Matrize 17 umgebenden ringförmigen Bereich der Auflagefläche 16 eingespannten Flachmaterial 1 wird mit dem Stempel 25 das Funktionselement 2 mit dem Nietbund 7 voraus zugeführt. Dieser bzw. dessen Material gelangt dann zunehmend durch die Fügeöffnung 9 hindurch bei plastischer Materialverformung unter das Flachmaterial 1 und bildet den verformten Nietbund 7.1, der im Wesentlichen in dem unterhalb des Flachmaterials im Wesentlichen von der rinnenartigen Vertiefung 20 gebildeten Raum aufgenommen ist. Der Verbindungs- bzw. Nietvorgang wird durch Verpressen des die Fügeöffnung 9 umgebenden Bereichs der Basis 11 zwischen der gegen die Oberseite der Basis 11 anliegenden Stirnseite 6 und dem unterhalb des Flachmaterials 1 im Wesentlichen von der Vertiefung 20 aufgenommenen verformten Nietbund 7.1 abgeschlossen.

Um eine drehsichere Verankerung des Funktionselementes 2 im Flachmaterial 1 mit einer möglichst hohen Drehmomentaufnahme zu erreichen, sind bei der dargestellten Ausführungsform an der Stirnseite 6 mehrere Vertiefungen vorgesehen, in die das Material aus dem die Fügeöffnung umgebenden Bereich beim Vernieten oder Verpressen hineinfließt. Anstelle oder aber zusätzlich zu den Vertiefungen können an der Stirnseite 6 auch Vorsprünge vorgesehen sein, die sich beim Vernieten in das die Fügeöffnung 9 umgebende Material der Basis 11 eindrücken.

Eine Besonderheit der Werkzeuganordnung 14 bzw. des mit dieser Werkzeuganordnung durchgeführten Verfahrens besteht darin, dass in einem einzigen Werkzeug und damit auch in einem einzigen Arbeitsgang die Verbindung 13 hergestellt wird, und zwar durch Formen des domförmigen Abschnitts 10 und durch anschließendes Fügen und gleichzeitiges Vernieten des Funktionselementes 2 im Bereich der Fügeöffnung 9.

Wie vorstehend ausgeführt, bestimmt das Maß x1 den Überstand des Matrizenbundes 18 über die Ebene der Anlagefläche 16 und damit den Abstand zwischen der Oberseite der Basis 11 und der Ebene der Oberseite des Flachmaterials 1 außerhalb des domförmigen Abschnitts 10. Das Maß x2 bestimmt den Abstand zwischen dem Matrizenbund 18 und der Bodenfläche der Vertiefung 20 und damit im Wesentlichen auch den Freiraum unterhalb des Flachmaterials 1 für das plastische Verformen des Nietbundes 7 und für die Ausbildung des verformten Nietbundes 7.1. Das Maß x2 bestimmt dann auch im Wesentlichen den Überstand des Verformten Nietbundes 7.1, d. h. das Maß, mit dem dieser verformte Nietbund 7.1 über die Unterseite des Flachmaterials 1 im Bereich der Fügeöffnung 9 vorsteht. Die Differenz x1 - x2 bestimmt dann den Abstand zwischen der Ebene der Unterseite des Flachmaterials 1 und dem Verformten Nietbund 7.1.

Die Figur 5 zeigt als weitere Ausführungsform der Erfindung eine Verbindung 13a, die sich von der Verbindung 13 u. a. dadurch unterscheidet, dass die Basis 11 des domförmigen Abschnitts 10a einen Durchmesser aufweist, der größer ist als der Durchmesser des Flanschbereichs 3, und der domförmige Abschnitt 10a an dem äußeren Rand seiner Basis 11 mit einer ringförmigen, die Achse FA konzentrisch umschließenden Sicke 26 geformt ist, die radial außen in den Rand 12 und radial innenliegend in den die Fügeöffnung 9 umschließenden planen oder im Wesentlichen planen und parallel zur Ebene des Flachmaterials orientierten Bereich der Basis 11 übergeht, der nach dem Vernieten zwischen der Stirnseite 6 und dem verformten Nietbund 7.1 eingespannt ist. Die Sicke 26 wird beispielsweise durch eine entsprechende Geometrie der der Matrize 17 entsprechenden Matrize oder aber durch einen kurzen Über- oder Weiterhub des Stempels 25 nach dem Vernieten des Funktionselementes 2 unter Mitführung zumindest eines den Nietkopf 19 aufweisenden Teils der Matrize erzeugt.

Die Verbindung 13a hat den zusätzlichen Vorteil, dass durch ringförmige Sicke 26 die Steifigkeit des Flachmaterials 1 im Bereich der Verbindung 13a bzw. im Bereich der Fügeöffnung 9 erhöht und allein schon hierdurch die Ausreißfestigkeit der Verbindung 13a verbessert wird. Weiterhin wird durch die ringförmige Sicke 26 auch erreicht, dass in Richtung der Achse FA bzw. des Pfeils A wirkende Ausreißkräfte zunächst zu einer zusätzlichen Verspannung des Funktionselementes 2 am Nietbund 7.1 im Flachmaterial 1 führen.

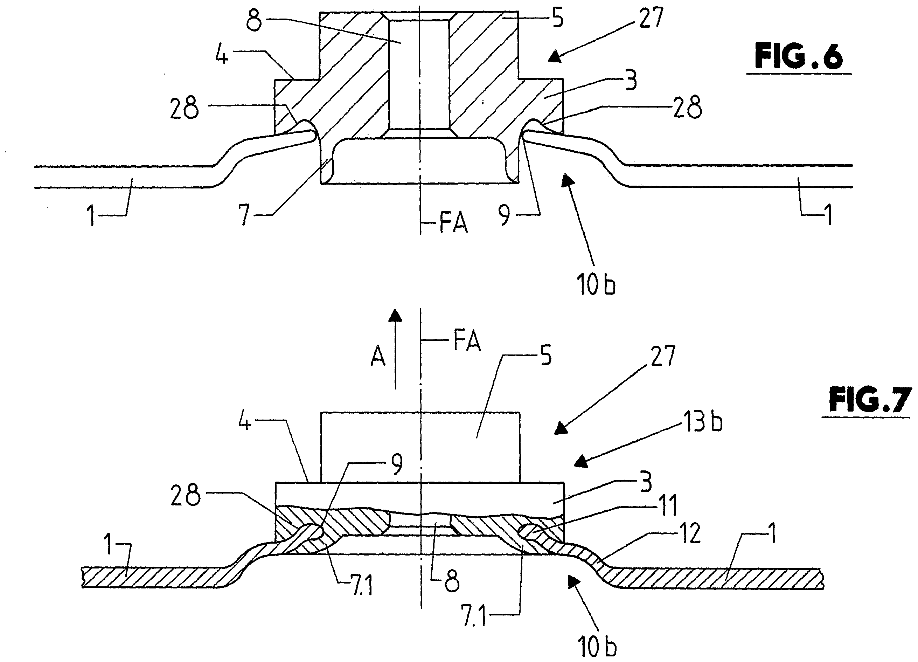

Die Figur 6 zeigt ein Funktionselement 27, welches sich von dem Funktionselement 2 im Wesentlichen nur dadurch unterscheidet, dass der Flanschabschnitt 3 an seiner den Nietbund 7 aufweisenden Seite nicht eine plane Stirnseite 6 besitzt, sondern mit einer Kegelfläche 28 ausgebildet ist, die sich bei der dargestellten Ausführungsform von dem Umfang des Flanschabschnittes 3 bis an den Nietbund 7 erstreckt und deren axialer Abstand von dem freien Ende des Nietbundes 7 mit zunehmendem Abstand von der Umfangsfläche des Flanschabschnittes 3 zunimmt bzw. deren Kegelwinkel sich zu der, den Nietbund 7 aufweisenden Seite des Funktionselementes 27 hin öffnet.

Die Figur 7 zeigt die Verbindung 13b zwischen dem Funktionselement 27 und dem Flachmaterial 1. Diese Verbindung wird beispielsweise wiederum mit der Werkzeuganordnung 14 der Figur 3 realisiert. Beim Fügen und Umlegen des Nietbundes 7 erfolgt dann durch die Geometrie der Vertiefung 28 ein zusätzliches "Aufkelchen" des Flachmaterials in dem die Fügeöffnung 9 umgebenden Bereich des domförmigen Abschnitts 10b im Sinne eines Vergrößerns des Abstandes von der Ebene der Unterseite des Flachmaterials 1, sodass nach dem Fertigstellen der Verbindung 13b das Funktionselement 27 zusätzlich mit dem von der Kegelfläche 28 gebildeten Hinterschnitt im Flachmaterial 1 gehalten ist.

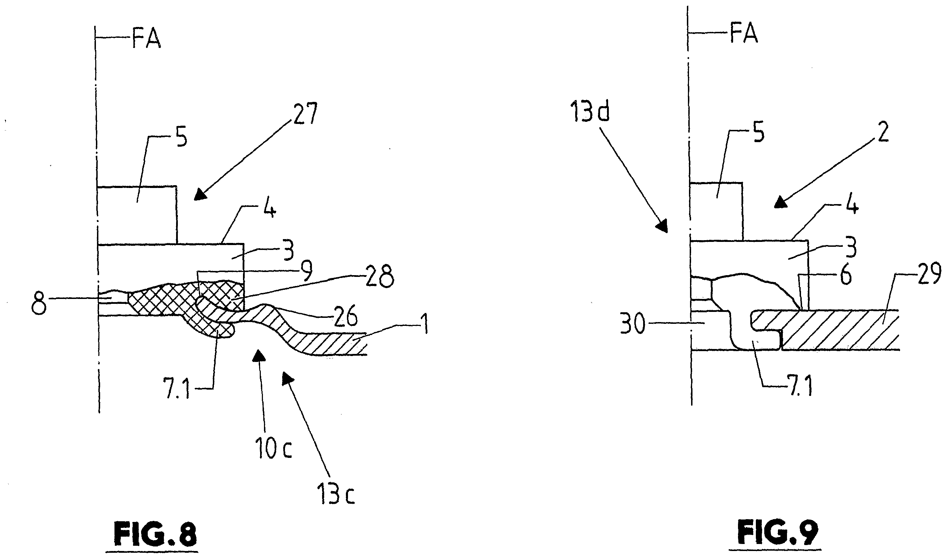

Die Figur 8 zeigt eine Verbindung 13c, die sich von der Verbindung 13b im Wesentlichen dadurch unterscheidet, dass zusätzlich die Sicke 26 vorgesehen ist, die dann wiederum beispielsweise durch eine entsprechende Ausbildung der Matrize 17 entsprechende Matrize oder aber durch einen zusätzlichen Weiterhub des Stempels 25 bei nachgebender Matrize erzeugt ist.

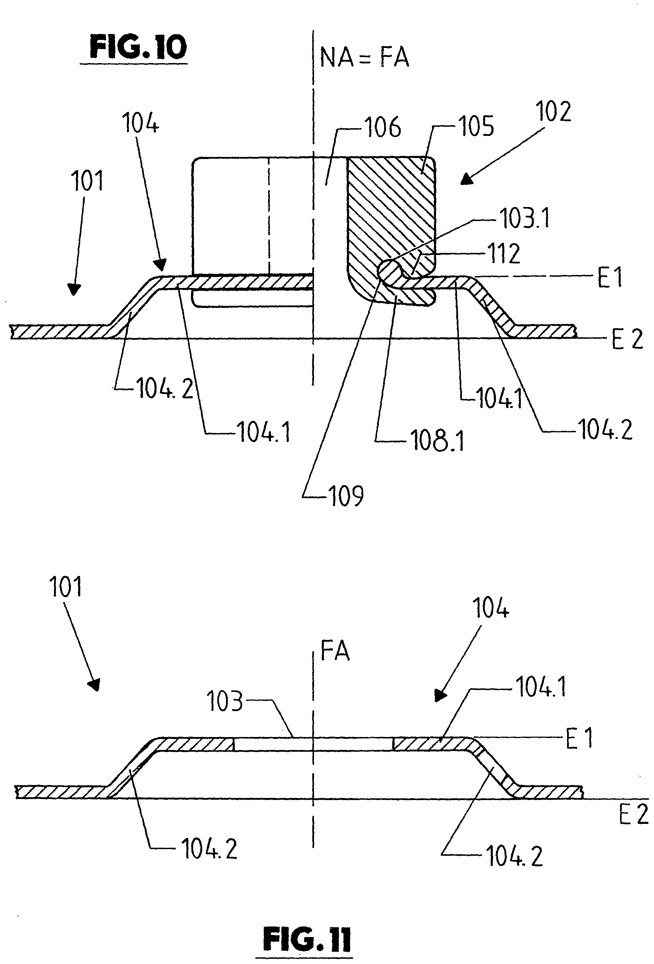

Die Figur 9 zeigt eine Verbindung 13d zwischen dem Funktionselement 2 und einem Flachmaterial 29 größerer Dicke D. Anstelle der Fügeöffnung 9 ist eine Fügeöffnung 30 vorgesehen, deren Durchmesser sich zur Unterseite des Flachmaterials 29, d. h. zu der dem Flanschabschnitt 3 abgewandten Seite des Flachmaterials 29 hin vergrößert, und zwar bei der dargestellten Ausführungsform stufenförmig. Die Fügeöffnung 30 kann auf verschiedenste Weise erzeugt werden, beispielsweise durch Stanzen und Verprägen oder aber bei einem sich konisch erweiternden Durchmesser durch Stanzen und Auffasen. Zum Verankern des Funktionselementes 2 wird der Nietbund 7 nach dem Fügen in den sich erweiternden Bereich der Fügeöffnung 30 umgelegt oder aber innerhalb der Fügeöffnung so verformt, dass sich die formschlüssige Verbindung zwischen dem Flachmaterial und dem Funktionselement 2 ergibt, ohne dass der verformte Nietbund 7.1 über die Unterseite des Flachmaterials 1 vorsteht. In den Figuren 10 - 13 ist 101 wiederum ein aus einem metallischen Flachmaterial, beispielsweise aus Stahlblech gefertigtes Werkstück, in welchem ein als Nietmutter 102 ausgebildetes Verbindungselement durch Fügen und Vernieten gehalten ist. Das Werkstück ist mit einer Fügeöffnung 103 versehen, die sich an der Basis 104.1 eines domartigen Abschnittes 104 befindet, der aus dem Flachmaterial des Werkstückes 101 durch bleibende bzw. plastische Verformung mit einem die Basis 104.1 umgebenden Rand 104.2 hergestellt ist, der bei der dargestellten Ausführungsform kegelstumpfförmig so ausgebildet ist, dass sich der entsprechende Kegelwinkel zu der Ebene E2 hin öffnet. Mit dem Rand 104.2 geht der domartige Abschnitt 104 bezogen auf die Achse FA der Fügeöffnung 103 in das Werkstück 101 außerhalb des Abschnittes 104 über, und zwar derart, dass bei der dargestellten Ausführungsform die Ebene E1 der Basis 104.1 von der Ebene E2 des restlichen Werkstückes 101 beabstandet ist.

Die Nietmutter 102, die ebenfalls aus einem metallischen, durch Nieten verformbaren Werkstoff, beispielsweise aus Stahl gefertigt ist, besteht im Wesentlichen aus einem Nietmutterkörper 105, der bei der dargestellten Ausführungsform an seiner Außenfläche kreiszylinderförmig zu einer Nietmutterachse NA ausgebildet ist und eine achsgleich mit der Achse NA angeordnete, beidendig offene Bohrung 106 mit Muttergewinde aufweist. Eine der beiden Stirnseiten des ringförmigen Nietmutterkörpers 105 bildet eine Stirnseite 105.1, an der die Nietmutter 102 nach dem Vernieten bzw. Verbinden mit dem Werkstück 101 gegen die der Ebene E2 abgewandte Seite 104.1 anliegt. Über diese Stirnseite 105.1 steht bei noch nicht verarbeiteter Nietmutter 102 ein Nietbund 108 vor, der hohlzylinderartig und die Achse NA konzentrisch umschließend ausgebildet ist, und zwar mit einem Innendurchmesser etwas größer als der Innendurchmesser der Gewindebohrung 106 und mit einem Außendurchmesser kleiner als der Außendurchmesser des Nietmutterkörpers 105. Die axiale Länge des Nietbundes 108 ist etwas kleiner als die axiale Länge des Nietmutterkörpers 105 bzw. der Abstand zwischen der die Stirnseite 105.1 bildenden Stirnseite und der gegenüberliegenden Stirnseite 105.2 des Nietmutterkörpers 105. Bei der dargestellten Ausführungsform, beträgt die axiale Länge des Nietbundes 108 etwa 60 - 70 % der axialen Länge des Nietmutterkörpers 105.

Zwischen dem Nietbund 108 und dem äußeren Rand des Nietmutterkörpers 105 ist in diesen an der Stirnseite 105.1 eine Vertiefung 109 eingebracht, die die Achse NA kreisringförmig umschließt. Die Vertiefung 109 ist von dem äußeren Rand beabstandet, sodass zwischen der Vertiefung 109 und dem äußeren Rand eine die Achse NA konzentrisch umschließende Ringfläche 110 gebildet ist, an der die Stirnseite 105.1 nutenförmige Vertiefungen 111 aufweist, so dass an der Ringfläche 110 zur Drehmomentübertragung eine Profilierung bestehend aus den Vertiefungen 111 und dazwischen gebildeten Vorsprüngen ausgebildet ist. Die Vertiefungen 111 reichen in die Vertiefung 109 hinein und erstrecken sich bei der dargestellten Ausführungsform jeweils bis an die Umfangsfläche 107 des Nietmutterkörpers 105 und besitzen eine Tiefe, die gleich der Tiefe der Vertiefung 109 ist. Die Tiefe der Vertiefung 109 und die Vertiefungen 111 können aber auch unterschiedlich sein. Insbesondere ist es möglich die Vertiefungen 111 so auszuführen, dass sie sich bei einer größeren Tiefe als die Tiefe der Vertiefung 109 in diese hineinerstrecken, womit sich am Boden der Vertiefung 109 noch eine zusätzliche Profilierung ergibt.

Bei der dargestellten Ausführungsform schließt die Vertiefung 109 mit ihrer bezogen auf die Achse NA innen liegenden Fläche unmittelbar an den Nietbund 108 an, d.h. die Außenfläche des Nietbundes 108 geht in die Fläche der Vertiefung 109 über. Weiterhin ist die Ausbildung so getroffen, dass der Boden der Vertiefung 109 in einer senkrecht zur Achse NA orientierten Ebene liegt, die die Bohrung 106 außerhalb des Gewindes schneidet, so dass der ringförmige Materialabschnitt zwischen der Fläche der Vertiefung 109 und der Bohrung 106 Teil des beim Vernieten verformten Nietbundes 108 ist und die Nietmutter 102 an der Stirnseite 105.1 eine stufenförmig Anlagefläche bildet, mit der sie nach dem Vernieten gegen die Basis 104.1 anliegt und die sich aus der radial außen liegenden Fläche der Vertiefung 109 und der anschließenden Ringfläche 110 zusammensetzt.

Die Nietmutter 102 ist durch Einsetzen (Fügen) des Nietbundes 108 in die Fügeöffnung 103 und durch anschließendes plastisches Verformen bzw. durch Vernieten derart am Werkstück 101 gehalten, dass der die Fügeöffnung 103 umgebende Bereich der Basis 104.1 zwischen der in den Figuren unteren Stirnseite 105.1 (einschließlich der Vertiefung 109) bzw. der an dieser Stirnseite 105.1 insbesondere auch durch die Vertiefung 109 gebildeten stufenförmigen Anlagefläche und dem verformten Nietbund 108.1 aufgenommen ist. Hierbei wird das Flachmaterial des Werkstückes 101 in seinem die Fügeöffnung 103 unmittelbar umgebenden Bereich der von der Vertiefung 109 und der Ringfläche 110 gebildeten stufenförmigen Anlagenfläche entsprechend derart bleibend bzw. plastisch verformt, dass sich - teilweise auch durch Fließen des Materials - ein die Fügeöffnung 103 umgebender und in der Vertiefung 109 aufgenommener kegelstumpfförmiger Rand 103.1 ausbildet, dessen Kegelwinkel sich zu der Ebene E2 hin öffnet, und zwar unter Vergrößerung des Querschnittes der Fügeöffnung 103. Weiterhin erfolgt beim Vernieten durch plastische Verformung des Materials des Werkstückes 101 eine Einschnürung des Randes 103.1, und zwar etwa dort, wo dieser kegelförmige Rand 103.1 in die übrige Basis 104.1 übergeht. Diese in den Figuren mit 112 bezeichnete, die Fügeöffnung 103 ringförmig umgebende Einschnürung wird im Wesentlichen durch das Verformen des Materials des Werkstückes 101 zwischen der Ringfläche 110 und dem verformten Nietbund 108.1 erzeugt, kann aber dort, wo die Vertiefungen 111 in die Vertiefung 109 münden, unterbrochen oder nur reduziert ausgebildet sein. Der freie Rand des verformten Nietbundes 108.1 besitzt bei der dargestellten Ausführungsform einen Abstand von der Achse NA, der gleich oder in etwa gleich dem halben Durchmesser des Nietmutterkörpers 105 ist.

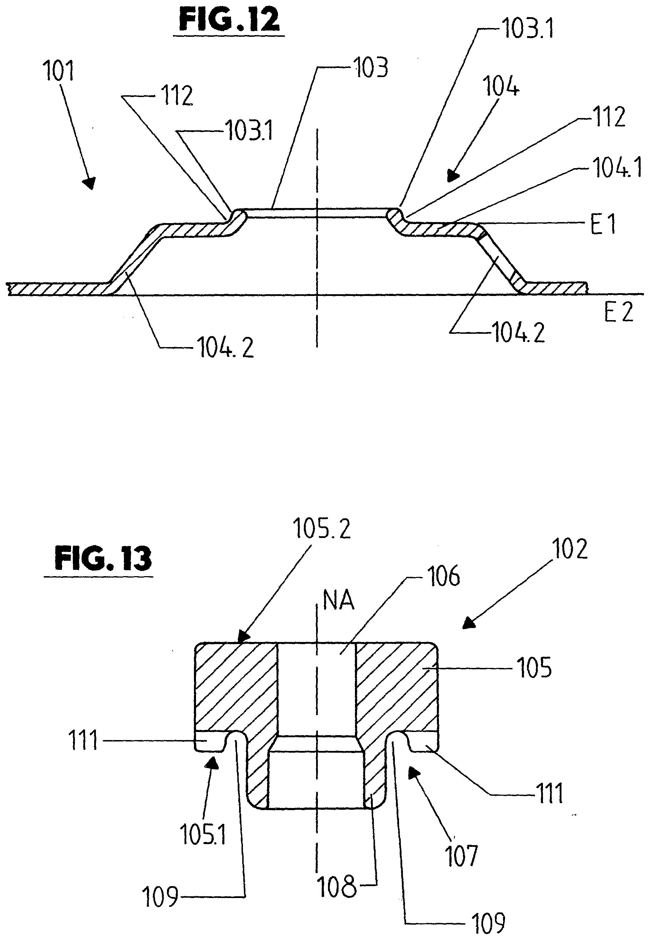

Die Figur 12 zeigt das Werkstück 101 in seiner nach dem Vernieten der Nietmutter 102 erzeugten Formgebung, d.h. mit dem die Fügeöffnung 103 umgebenden kegelförmigen Rand 103.1 und mit der Einschnürung 112 an der der Ebene E2 abgewandten Oberseite am Übergang des Randes 103.1 in die restliche Basis 104.1

Durch den sich beim Vernieten ausbildenden, in der Vertiefung 109 aufgenommenen kegelförmigen Rand 103.1, der auch dicht von dem Material der Nietmutter 102 umschlossen ist, sowie durch die Einschnürung 112 ergibt sich eine hohe Ausreißfestigkeit für die im Werkstück 101 verankerte Nietmutter 102 auch gegenüber solchen Kräften, die in der Achse NA wirken und bei der für die Figur 10 gewählten Darstellung nach oben gerichtet sind, d.h. von der Ebene E2 weg. Durch die sich beim Vernieten in das Material des Werkstückes 101 eindrückenden und von den Vertiefungen 111 gebildeten Vorsprünge ist die verdrehungssichere Verankerung der Nietmutter 102 mit einer hohen Drehmomentfestigkeit erreicht.

Beim Vernieten im Bereich des Randes 103.1 eventuell verdrängtes Material wird in der Vertiefung 109 aufgenommen ohne dass es zu einer radial zur Achse NA wirkenden Druckringspannung zwischen dem Rand der Fügeöffnung und der Nietmutter 102 bzw. dem Nietbund 108 kommt.

Das Fügen und Vernieten der Nietmutter 102 erfolgt in einem geeigneten Werkzeug, wobei die Möglichkeit besteht, das Werkstück 101 vor dem Fügen der Nietmutter 102 mit dem domartigen Abschnitt 104 zu versehen, oder aber diesen Abschnitt erst in dem Werkzeug zu formen, in welchem auch das Vernieten der Nietmutter 102 erfolgt. In jedem Fall wird das Werkstück 101 zunächst mit der Fügeöffnung 103 versehen, und zwar vorzugsweise vor dem Formen des domartigen Abschnittes 104. Weiterhin wird die Fügeöffnung mit einem solchen Durchmesser hergestellt, dass beim Fügen der Nietbund 108 in diese Öffnung eingesetzt werden kann.

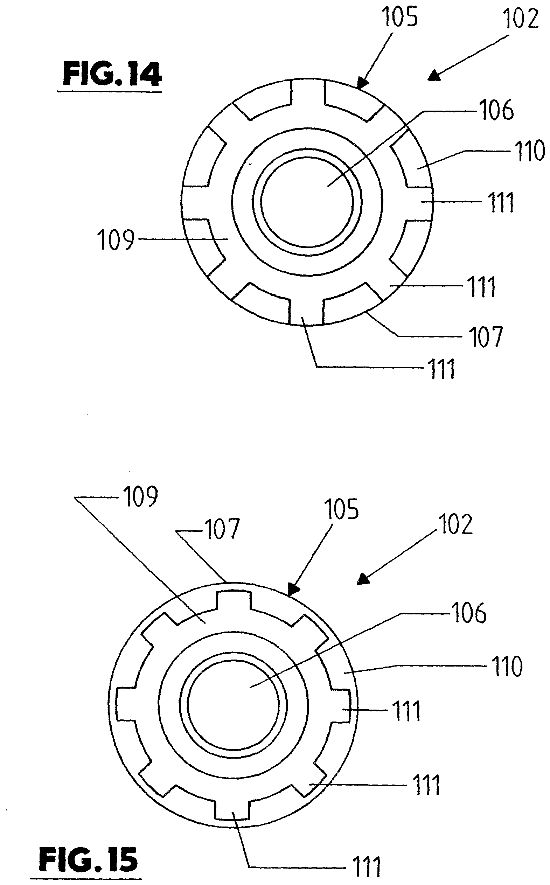

Vorstehend wurde davon ausgegangen, dass die Vertiefungen 111 bis an dem Umfang des Nietmutterkörpers 105 reichen. In der Figur 15 ist eine Ausführung dargestellt, bei der die Vertiefungen 111 mit Abstand von der Umfangsfläche des Nietmutterkörpers 105 endet.

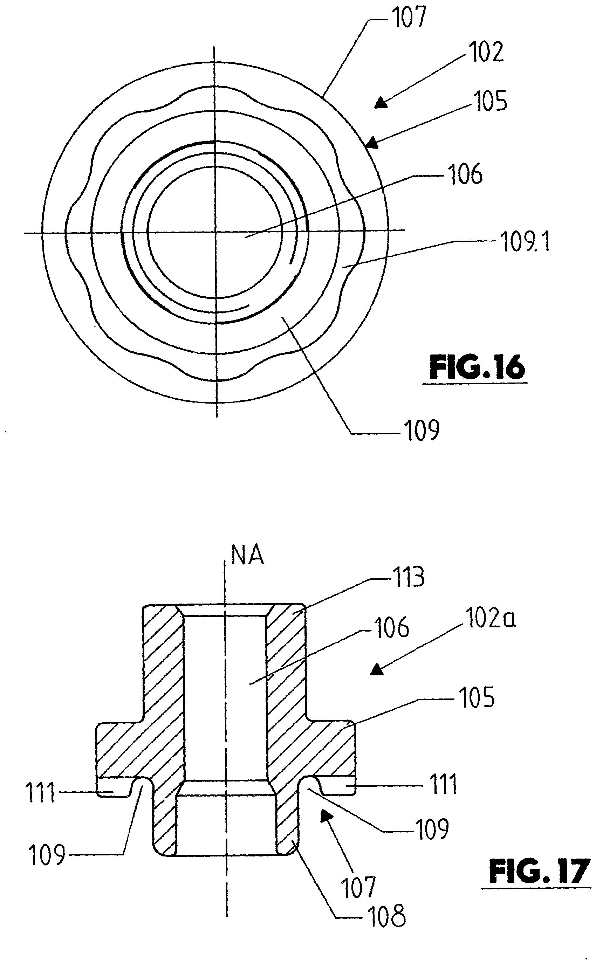

Die Figur 16 zeigt eine Ausführungsform, bei der zur Erzielung der verdrehungssicheren Verbindung die Vertiefung 109 von einem Vorsprung 109.1 umschlossen ist, der an seinem radial außenliegenden Rand eine von der Kreisform abweichenden Verlauf aufweist, nämlich einen in etwa polygonartigen Verlauf mit zur Umfangsfläche 107 hin konvex gekrümmten Eckbereichen und mit dazwischen liegenden zur Umfangsfläche 107 hin konkav gekrümmten Seiten.

Die Figur 17 zeigt in einer Darstellung wie Figur 13 eine Nietmutter 102a, die sich von der Nietmutter 102 lediglich dadurch unterscheidet, dass der Nietmutterkörper 105a an seinem den Nietbund 108 und der Vertiefung 109 abgewandten oberen Stirnseite einstückig mit einem über diese Stirnseite wegstehenden und achsgleich mit der Achse NA angeordneten Vorsprung 113 hergestellt ist, in welchen sich die Gewindebohrung 106a fortsetzt.

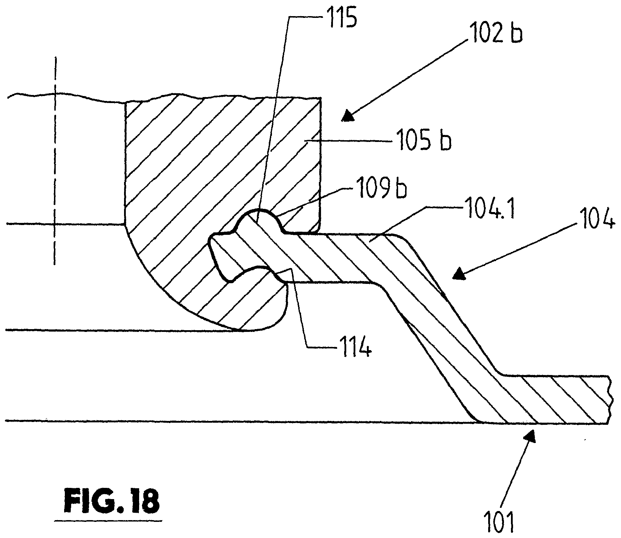

Die Figur 18 zeigt in sehr vergrößerter Teildarstellung die Verbindung zwischen dem domartigen Abschnitt 104 des aus Blech gefertigten Werkstückes 101 mit einer Nietmutter 102b, die sich von der Nietmutter 102 dadurch unterscheidet, dass die der Vertiefung 109 entsprechende Vertiefung 109b nicht unmittelbar dem Nietbund 108 benachbart vorgesehen ist, sondern den Nietbund 108 mit Abstand umschließt, d.h. der radial innen liegende Rand der Vertiefung 109b ist von dem Nietbund 108 beabstandet. Nach dem Einsetzen der Nietmutter 102b mit dem noch nicht verformten Nietbund 108 in die Fügeöffnung 103, deren Durchmesser auch bei dieser Ausführungsform wieder höchstens gleich, vorzugsweise aber etwas größer ist als der Außendurchmesser des nicht verformten Nietbundes 108, wird der Nietbund 108 in den Nietbund 108.1 derart verformt, dass das Material des Werkstückes 101 in dem die Fügeöffnung 103 umgebenden Bereich zwischen der unteren, die Vertiefung 109b aufweisenden Ring- oder Anlagefläche des Nietmutterkörpers 105b und dem plastisch verformten Nietbund 108.1 eingespannt ist, wobei das Material des Werkstückes hierbei u.a. plastisch bzw. durch Fließen in die Vertiefung 109b verformt wird und sich dadurch einerseits an der der Ebene E2 zugewandten Unterseite der Basis 104.1 eine die Fügeöffnung 103 umschließende Einschnürung 114 ergibt und andererseits ein ringförmiger, in die Vertiefung 109b eingreifender wulstartiger Vorsprung 115 an der der Ebene E2 abgewandten Oberseite der Basis 104.1. Durch die Einschnürung 114 sowie durch den in die Vertiefung 109b eingreifenden Vorsprung 115 ergibt sich auch bei dieser Ausführungsform eine hohe Ausreißkraft für die im Werkstück 101 verankerte Nietmutter 102b speziell gegenüber solchen Kräften, die in der Achse NA wirken und bei der für die Figur 18 gewählten Darstellung nach oben gerichtet sind, d.h. von der Ebene E2 weg. Um eine verdrehungssichere Verankerung der Nietmutter 102b mit hoher Drehmomentfestigkeit zu erreichen, ist auch bei diese Ausführungsform die den Nietbund 108 aufweisende Stirnseite des Nietmutterkörpers 105b wiederum strukturiert.

Allen vorbeschriebenen Ausführungsformen ist gemeinsam, dass die Fügeöffnung 103 mit einem Durchmesser erzeugt wird, der wenigstens gleich, vorzugsweise aber größer ist als der Außendurchmesser des Nietbundes 108.

Die Erfindung wurde voranstehend am Beispiel von Nietmuttern beschrieben. Es versteht sich, dass die Erfindung auch bei anderen Verbindungselementen Verwendung finden kann, beispielsweise bei Nietbolzen, die dann an einer eine Stirnseite bildenden Seite eines Bolzenkopfes den Nietbund 108, die Vertiefung 109 sowie die mit den Vertiefungen 111 oder einer anderen Profilierung versehene Ringfläche 110 aufweisen und bei denen der Bolzenschaft über diese Stirnseite weg steht, und zwar konzentrisch von dem Nietbund 108 umschlossen.

Die Erfindung wurde voranstehend an verschiedenen Ausführungsbeispielen beschrieben. Es versteht sich, dass im Rahmen der Ansprüche zahlreiche Änderungen sowie Abwandlungen möglich sind, ohne das dadurch der der Erfindung zugrunde liegende Erfindungsgedanke verlassen wird.

Vorstehend wurde davon ausgegangen, dass an dem jeweiligen Fügebereich die Fügeöffnung bereits vor dem Formen des domartigen Abschnitts in das Blech bzw. Flachmaterial 101 eingebracht ist. Grundsätzlich besteht selbstverständlich auch die Möglichkeit, im Fügebereich zunächst den domartigen Abschnitt zu formen und dann in dessen Basis die Fügeöffnung einzubringen, und zwar wiederum mit einem Durchmesser der gleich oder geringfügig größer ist als der Außendurchmesser des Nietbundes.

### Bezugszeichenliste

- 1: Blech- bzw. Flachmaterial
- 2: Funktionselement
- 3: Flanschabschnitt des Funktionselementes
- 4: Stirnseite
- 5: Befestigungsabschnitt
- 6: Stirnseite
- 7: Nietbund
- 7.1: verformter Nietbund
- 8: Bohrung
- 9: Fügeöffnung
- 10, 10a, 10b, 10c: domförmig verformter Abschnitt des Flachmaterials
- 11: Basis des domförmigen Abschnitts 10
- 12: kegelförmiger Rand des domförmigen Abschnitts 10
- 13, 13a, 13b, 13c, 13d: Verbindung
- 14: Werkzeuganordnung
- 15: Unterwerkzeug
- 16: An- oder Auflagefläche am Unterwerkzeug 15
- 17: Matrize
- 18: Matrizenbund
- 19: Nietkopf
- 20: Vertiefung
- 21: Niederhalter
- 22: ringförmige Niederhalterfläche
- 23: Innenfläche des Niederhalters 21
- 24: Ausnehmung
- 25: Stempel
- 26: Sicke
- 27: Funktionselement
- 28: Vertiefung oder Kegelfläche
- 29: Flachmaterial
- 30: Fügeöffnung
- 101: Werkstück
- 102, 102a, 102b: Nietmutter
- 103: Fügeöffnung
- 104: domartiger Abschnitt
- 104.1: Basis
- 104.2: Rand
- 105, 105a, 105b: Nietmutterkörper
- 106: Gewindebohrung
- 105.1, 105.2: Stirnseite
- 107: Umfangsfläche des Nietmutterkörpers
- 108: Nietbund
- 108.1: verformter Nietbund
- 109, 109b: Vertiefung
- 109.1: Vorsprung
- 110: Ringfläche
- 111: Vertiefung
- 112: Einschnürung
- 113: Vorsprung
- 114: Einschnürung
- 115: Vorsprung oder Wulst

- A: Ausreißkraft
- D: Materialstärke des Flachmaterials 1 bzw. 29
- FA: Achse des Funktionselementes bzw. der Fügeöffnung
- NA: Achse der Nietmutter 102
- WA: Werkzeugachse
- x1: Überstand des Matrizenbundes 18 über die Ebene der Anlagefläche 16
- x2: Überstand des Matrizenbundes 18 über die Ebene des Bodens der Vertiefung 20

## Patentansprüche

1. Verfahren zum Anbringen eines Funktionselementes (102, 102a), beispielsweise eines Verbindungselementes, z.B. eines Nietbolzens oder einer Nietmutter, an einem plastisch verformbaren Flachmaterial (101) oder Werkstück, wobei das Funktionselement (102, 102a) an einer Stirnseite (105.1) einen über diese Seite weg stehenden und von einem hohlen oder rohrförmigen Abschnitt gebildeten Nietbund (108) aufweist, wobei in einem Fügebereich im Flachmaterial (101) durch plastische Verformung ein domartiger Abschnitt (104) gebildet ist, der mit seiner Basis (104.1) über eine Ebene (E2) des diesen Abschnitt umgebenen Flachmaterials (101) vorsteht und an der Basis (104.1) eine Fügeöffnung (103) aufweist, und wobei das Anbringen des Funktionselementes (102, 102a) an dem Flachmaterial (101) in einem Füge- und Nietvorgang durch Einführen des Nietbundes (108) in die Fügeöffnung (103) und durch plastisches Verformen des Nietbundes (108) derart erfolgt, dass die Basis (104.1) in einem die Fügeöffnung (103) umgebenden Bereich zwischen dem verformten Nietbund (108.1) und der Stirnseite (105.1) des Funktionselementes (102, 102a) aufgenommen ist,
wobei bei Verwendung eines Funktionselementes (102, 102a) mit wenigstens einer an der Stirnseite (105.1) vorgesehenen Vertiefung (109) und einer diese Vertiefung (109) umgebenden Ringfläche (110) der Füge- und Nietvorgang derart erfolgt, dass das Flachmaterial (101) durch plastische Verformung und/oder durch Fließen an einem die Fügeöffnung (103) umschließenden Rand (103.1) in die ringförmige Vertiefung (109) verformt wird,
**dadurch gekennzeichnet,**
**dass** der Füge- und Nietvorgang weiterhin derart erfolgt, dass das Flachmaterial (101) durch die plastische Verformung und/oder durch das Fließen unter Ausbildung eines in der Vertiefung (109) aufgenommenen wulstförmigen Vorsprungs verformt und zwischen der die Vertiefung (109) umgebenden Ringfläche (110) und dem Nietbund (108.1) eingeschnürt wird, wobei der Füge- und Nietvorgang ohne Ausbildung einer Druckringspannung zwischen dem Rand (103.1) und dem Funktionselement (102, 102a, 102b) erfolgt.

2. Verfahren nach Anspruch 1, **dadurch gekennzeichnet,**
**dass** der Füge- und Nietvorgang derart erfolgt, dass der die Fügeöffnung (103) umgebende und in der Vertiefung (109) aufgenommene Rand (103.1) zumindest nach dem Nietvorgang eine kegelringartige Form aufweist, und zwar mit einem sich zu einer Ebene (E2) des Flachmaterials (101) hin öffnenden Kegelwinkel.

3. Verfahren nach einem der vorhergehenden Ansprüche, **dadurch gekennzeichnet, dass** während des Nietvorgangs wenigstens eine am Funktionselement (102, 102a), vorzugsweise an der Stirnseite (105.1) und/oder am Nietbund (108) vorgesehene Profilierung in das Flachmaterial (101) eingepresst wird, wobei die wenigstens eine Profilierung beispielsweise von Vertiefungen (111) und/oder Vorsprüngen gebildet ist.

4. Verfahren nach einem der vorhergehenden Ansprüche, **gekennzeichnet durch** die Verwendung
eines Funktionselementes (102, 102a) mit wenigstens einer an den Nietbund (108) anschließenden Vertiefung (109, 109b)
und/oder
eines Funktionselementes mit einer ringförmigen Vertiefung (109, 109b),
und/oder
eines Funktionselementes (102, 102a) mit einer Vertiefung (109), die zumindest an einem Randbereich einen von der Kreisform abweichenden Verlauf, beispielsweise einen polygonalen Verlauf aufweist.

5. Verfahren nach einem der vorhergehenden Ansprüche, **dadurch gekennzeichnet, dass** die Fügeöffnung (103) am jeweiligen Fügebereich in das Flachmaterial (1) vor dem Formen eines domartigen Abschnitts (104) eingebracht wird,
oder
dass die Fügeöffnung (103) am jeweiligen Fügebereich nach dem Formen des domartigen Abschnitts (104) eingebracht wird,
und/oder
dass der domartige Abschnitt (104) vor dem Füge- und Nietvorgang mit einer die Fügeöffnung (103) umgebenden planen oder im Wesentlichen planen Basis geformt wird, die in einer Ebene parallel zur Ebene des den domartigen Abschnitt (104) umgebenden Flachmaterials (1) oder senkrecht zur Achse der Fügeöffnung (103) liegt,
und/oder
dass die Fügeöffnung (103) mit einem Durchmesser erzeugt wird, der wenigstens gleich dem Außendurchmesser des Nietbundes (108) ist.

6. Verfahren nach einem der vorhergehenden Ansprüche, **dadurch gekennzeichnet, dass** das Verankern des Funktionselementes (102, 102a) derart erfolgt, dass der zwischen dem verformten Nietbund (108.1) und Stirnseite (105.1) des Funktionselementes (102, 102a) aufgenommene Randbereich der Fügeöffnung (103) in der Ebene parallel zu der Ebene des den domartigen Abschnitt (104) umgebenden Flachmaterials (1) bzw. senkrecht zur Achse der Fügeöffnung (103) liegt.

7. Verfahren nach einem der vorhergehenden Ansprüche, **dadurch gekennzeichnet, dass** während des Füge- und Nietvorgangs der die Fügeöffnung (103) umgebende Randbereich der Basis (104.1) so verformt wird, dass der zwischen dem verformten Nietbund (108.1) und der Anlagefläche eingespannte, die Fügeöffnung (103) umgebende Randbereich der Basis (104.1) kegelringartig ausgebildet ist,
wobei der die Fügeöffnung (103) umgebende Randbereich beispielsweise so verformt wird, dass sich der Kegelwinkel dieses Randbereichs in den domartigen Abschnitt öffnet.

8. Verfahren nach einem der vorhergehenden Ansprüche, **gekennzeichnet durch** die Verwendung einer Werkzeuganordnung (14) mit einer Matrize (17), mit einem Niederhalter (21) und einem Stempel (25), wobei die Matrize einen Nietkopf (19) zum Verformen des Nietbundes (108) sowie einen diesen Nietkopf (19) umschließenden Matrizenbund (18) aufweist, der über eine am ersten Werkzeugteil (15) gebildete An- oder Auflagefläche für das Flachmaterial (1) vorsteht und beim Schließen des Werkzeugs unter Mitwirkung des Niederhalters (21) den domartigen Abschnitt (104) formt, und dass nach dem Formen des domartigen Abschnitts (104) durch Bewegen des Stempels (25) in Richtung auf den Nietkopf (19) das Anbringen des mit dem Stempel (25) mitgeführten Funktionselementes (102, 102a) durch Fügen und Verformen des Nietbundes mit dem Nietkopf (19) erfolgt.

9. Verbindung zwischen einem Flachmaterial (1) und wenigstens einem Funktionselement (102a, 102b) hergestellt nach dem Verfahren nach einem der vorherigen Ansprüche.

## Claims

1. A method for attaching a functional element (102, 102a), for example a connection element, e.g. a riveting bolt or a riveting nut, to a plastically deformable flat material (101) or workpiece, wherein the functional element (102, 102a) has, on an end face (105.1), a riveting collar (108), which projects beyond said face and is formed by a hollow or tubular section, wherein a dome-like section (104) is formed by plastic deformation in a joining region in the flat material (101), wherein said dome-like section projects with its base (104.1) beyond a plane (E2) of the flat material (101) that surrounds said section and has a joining opening (103) in the base (104.1), and wherein the attachment of the functional element (102, 102a) to the flat material (101) is carried out using a joining and riveting process by introducing the riveting collar (108) into the joining opening (103) and by plastically deforming the riveting collar (108) in such a manner that the base (104.1) is received in a region surrounding the joining opening (103) between the deformed riveting collar (108.1) and the end face (105.1) of the functional element (102, 102a),
Wherein, if a functional element (102, 102a) is used that has at least one depression (109) provided on the end face (105.1) and an annular face (110) surrounding said depression (109), the joining and riveting process is carried out in such a manner that the flat material (101) is deformed into the annular depression (109) by plastic deformation and/or by flowing at an edge (103.1) surrounding the joining opening (103),
**characterised in that**
the joining and riveting process furthermore is carried out in such a manner that the flat material (101) is deformed by the plastic deformation and/or flowing while forming a bead-like protrusion, which is received in the depression (109), and is constricted between the annular face (110), which surrounds the depression (109), and the riveting collar (108.1), wherein the joining and riveting process is carried out without forming a compression ring stress between the edge (103.1) and the functional element (102, 102a, 102b).

2. The method according to Claim 1,
**characterised in that**
the joining and riveting process is carried out in such a manner that the edge (103.1), which surrounds the joining opening (103) and is received in the depression (109), has a shape in the manner of a conical ring, at least after the riveting process, with a cone angle that opens towards a plane (E2) of the flat material (101).

3. The method according to any one of the preceding claims,
**characterised in that**
during the riveting process, at least one profiled portion, which is provided on the functional element (102, 102a), preferably on the end face (105.1) and/or on the riveting collar (108), is pressed into the flat material (101), wherein the at least one profiled portion is formed for example by depressions (111) and/or protrusions.

4. The method according to any one of the preceding claims,
**characterised by** the use of
a functional element (102, 102a) having at least one depression (109, 109b) adjoining the riveting collar (108),
and/or
a functional element having an annular depression (109, 109b),
and/or
a functional element (102, 102a) having a depression (109) that has, at least in an edge region, a shape that deviates from the circular shape, for example a polygonal shape.

5. The method according to any one of the preceding claims,
**characterised in that**
the joining opening (103) in the respective joining region is introduced into the flat material (1) before the dome-like section (104) is shaped,
or **in that**
the joining opening (103) in the respective joining region is introduced after the dome-like section (104) is shaped,
and/or **in that**
the dome-like section (104) is shaped before the joining and riveting process with a planar or substantially planar base, which surrounds the joining opening (103) and lies in a plane parallel to the plane of the flat material (1) surrounding the dome-like section (104) or perpendicular to the axis of the joining opening (103), and/or **in that**
the joining opening (103) is produced with a diameter that is at least equal to the outer diameter of the riveting collar (108).

6. The method according to any one of the preceding claims,
**characterised in that**
the anchoring of the functional element (102, 102a) is carried out in such a manner that the edge region of the joining opening (103) that is received between the deformed riveting collar (108.1) and the end face (105.1) of the functional element (102, 102a) lies in the plane parallel to the plane of the flat material (1) surrounding the dome-like section (104) or perpendicular to the axis of the joining opening (103).

7. The method according to any one of the preceding claims,
**characterised in that**
during the joining and riveting process, the edge region of the base (104.1) that surrounds the joining opening (103) is deformed such that the edge region of the base (104.1) that is clamped between the deformed riveting collar (108.1) and the contact face and surrounds the joining opening (103) is in the form of a conical ring, wherein the edge region surrounding the joining opening (103) is deformed, for example, such that the cone angle of said edge region opens into the dome-like section.

8. The method according to any one of the preceding claims,
**characterised by**
the use of a die arrangement (14) having a bottom die (17), a holder (21) and a stamp (25), wherein the bottom die has a riveting head (19) for deforming the riveting collar (108) and a die collar (18), which surrounds said riveting head (19) and projects beyond a contact face or rest face, which is formed on the first die part (15), for the flat material (1) and shapes the dome-like section (104) together with the holder (21) when the die is closed, and in that, after the dome-like section (104) is shaped by movement of the stamp (25) in the direction of the riveting head (19), the functional element (102, 102a) carried with the stamp (25) is attached by joining and deforming the riveting collar with the riveting head (19).

9. A connection between a flat material (1) and at least one functional element (102a, 102b) produced using the method according to one of the preceding claims.

## Revendications

1. Procédé pour appliquer un élément fonctionnel (102,102a), par exemple un élément de liaison, par ex.: un boulon rivé ou un écrou rivé, sur un matériau plat plastiquement déformable (101) ou une pièce, l'élément fonctionnel (102,102a) comportant sur une face avant (105.1) un collet de rivetage (108) relevé sur ce côté et formé d'une section creuse ou tubulaire, une section (104) en forme de dôme étant formée dans une zone d'assemblage dans le matériau plat (101) par déformation plastique, qui dépasse avec sa base (104.1) sur un plan (E2) de ce matériau plat (101) entourant cette section et comporte une ouverture d'assemblage (103) sur la base (104.1) et la mise en place de l'élément fonctionnel (102,102a) sur le matériau plat (101) ayant lieu dans une opération d'assemblage et de rivetage par introduction du collet de rivetage (108) dans l'ouverture d'assemblage (103) et par déformation plastique du collet de rivetage (108) de telle manière que la base (104.1) est logée dans une zone entourant l'ouverture d'assemblage (103) entre le collet de rivetage déformé (108.1) et la face avant (105.1) de l'élément fonctionnel (102,102a),
lors de l'utilisation d'un élément fonctionnel (102,102a) avec au moins une cavité (109) prévue sur la face avant (105.1) et une surface annulaire (110) entourant cette cavité (109), l'opération d'assemblage et de rivetage ayant lieu de telle manière que le matériau plat (101) est déformé par déformation plastique et/ou par fluage sur un bord (103.1) entourant l'ouverture d'assemblage (103) dans la cavité de forme annulaire (109),
**caractérisé en ce que**
l'opération d'assemblage et de rivetage a lieu en plus de telle manière que le matériau plat (101) est déformé par déformation plastique et/ou par le fluage avec formation d'une saillie en forme de bourrelet logée dans la cavité (109) et est resserré entre la surface annulaire (110) entourant la cavité (109) et le collet de rivetage (108.1), l'opération d'assemblage et de rivetage ayant lieu sans formation d'une contrainte annulaire de pression entre le bord (103.1) et l'élément fonctionnel (102,102a,102b).

2. Procédé selon la revendication 1, **caractérisé en ce que** l'opération d'assemblage et de rivetage a lieu de telle manière que le bord (103.1) entourant l'ouverture d'assemblage (103) et logé dans la cavité (109) comporte au moins après l'opération de rivetage une forme de type bague conique et en réalité avec un angle de cône s'ouvrant vers un plan (E2) du matériau plat (101).

3. Procédé selon l'une quelconque des revendications précédentes, **caractérisé en ce que** pendant l'opération de rivetage au moins un profilage prévu sur l'élément fonctionnel (102,102a), de préférence sur la face avant (105.1) et/ou sur le collet de rivetage (108) est empreint dans le matériau plat (101), au moins un profilage étant formé par exemple par des cavités (111) et/ou des saillies.

4. Procédé selon l'une quelconque des revendications précédentes, **caractérisé par** l'utilisation d'un élément fonctionnel (102, 102a) avec au moins une cavité (109,109b) se raccordant au collet de rivetage (108) et/ou d'un élément fonctionnel avec une cavité de forme annulaire (109,109b) et/ou d'un élément fonctionnel (102,102a) avec une cavité (109), qui comporte au moins sur une zone de bordure une allure s'écartant de la forme circulaire, par exemple une allure polygonale.

5. Procédé selon l'une quelconque des revendications précédentes, **caractérisé en ce que** l'ouverture d'assemblage (103) est introduite dans la zone d'assemblage respective dans le matériau plat (1) avant le formage d'une section en forme de dôme (104) ou **en ce que** l'ouverture d'assemblage (103) est introduite dans la zone d'assemblage respective après le formage de la section en forme de dôme (104) et/ou **en ce que** la section en forme de dôme (104) est formée avant l'opération d'assemblage et de rivetage avec une base plane entourant l'ouverture d'assemblage (103) ou une base pour l'essentiel plane, qui est dans un plan parallèle au plan du matériau plat (1) entourant la section en forme de dôme (104) ou perpendiculaire à l'axe de l'ouverture d'assemblage (103), et/ou **en ce que** l'ouverture d'assemblage (103) est produite avec un diamètre qui est au moins égal au diamètre extérieur du collet de rivetage (108).

6. Procédé selon l'une quelconque des revendications précédentes, **caractérisé en ce que** l'ancrage de l'élément fonctionnel (102,102a) a lieu de telle manière que la zone de bordure de l'ouverture d'assemblage (103) logée entre le collet de rivetage (108.1) déformé et la face avant (105.1) de l'élément fonctionnel (102,102a) se situe dans le plan parallèle au plan du matériau plat (1) entourant la section en forme de dôme (104) ou perpendiculaire à l'axe de l'ouverture d'assemblage (103).

7. Procédé selon l'une quelconque des revendications précédentes, **caractérisé en ce que** pendant l'opération d'assemblage et de rivetage, la zone de bordure de la base (104.1) entourant l'ouverture d'assemblage (103) est déformée de telle sorte que la zone de bordure de la base (104.1) étalée entre le collet de rivetage (108.1) déformé et la surface d'appui, entourant l'ouverture d'assemblage (103) est constituée comme une bague conique, la zone de bordure entourant l'ouverture d'assemblage (103) étant par exemple déformée de telle manière que l'angle de cône de cette zone de bordure s'ouvre dans la section en forme de dôme.

8. Procédé selon l'une quelconque des revendications précédentes, **caractérisé par** l'utilisation d'un agencement d'outil (14) avec une matrice (17), avec un serre-flan (21) et un poinçon (25), la matrice comportant une tête de rivet (19) pour déformer le collet de rivetage (108) ainsi qu'un collet de matrice (18) entourant cette tête de rivet (19), qui dépasse sur une surface d'appui ou de support pour le matériau plat (1) formée sur la première partie d'outil (15) et forme la section en forme de dôme (104) lors de la fermeture de l'outil en coopération avec le serre-flan (21) et en ce qu'après le formage de la section en forme de dôme (104) par déplacement du poinçon (25) en direction de la tête de rivet (19), la mise en place de l'élément fonctionnel (102,102a) entraîné avec le poinçon (25) a lieu par assemblage et déformation du collet de rivetage avec la tête de rivet (19).

9. Assemblage entre un matériau plat (1) et au moins un élément fonctionnel (102a, 102b) réalisé selon le procédé selon l'une quelconque des revendications précédentes.
